# EUROPÄISCHE PATENTANMELDUNG

(11) **EP 3 330 439 A1**
(43) Veröffentlichungstag der Anmeldung: **06.06.2018**
(21) Anmeldenummer: 17203069.4
(22) Anmeldetag: 22.11.2017
(51) Int. Cl.: E01F 7/04

(54) **SEILBREMSE**

(30) Priorität: 29.11.2016 CH 15652016
(71) Anmelder: Jakob AG, CH-3555 Trubschachen (CH)
(72) Erfinder: Urs, Schneider, 3550 Langnau (CH); Raphael, Murri, 3294 Büren a.A. (CH)
(74) Vertreter: Rentsch Partner AG

(57) **Zusammenfassung**

Die vorgeschlagene Seilbremse (10) umfasst eine zwischen einem ersten Endpunkt (E1) und einem zweiten Endpunkt (E2) verlaufende Seilanordnung (14a, 14b; AS, AS'; IS, IS', ZS1 -ZSn; ZS1'-ZSn'), welche zur Aufnahme von zwischen den Endpunkten (E1, E2) anliegenden Zugkräften ausgebildet ist, wobei die Seilanordnung (14a, 14b; AS, AS'; IS, IS', ZS1 -ZSn; ZS1 '-ZSn') wenigstens einen zwischen den beiden Endpunkten (E1, E2) verlaufenden Strang (S1, S2) aufweist, in welchem eine Mehrzahl von Seilen (AS, AS'; IS, IS', ZS1 -ZSn; ZS1 '-ZSn') abgestufter Länge in Strangrichtung parallel zueinander angeordnet und unter Ausbildung von offenen Seilschlaufen jeweils an ihren Enden miteinander fest verbunden sind, wobei die Seile ein Aussenseil (AS, AS') maximaler Länge umfassen, welches als Hauptseil gegenüber den übrigen Seilen (IS, IS', ZS1 -ZSn; ZS1 '-ZSn') einen grösseren Seildurchmesser aufweist.

Eine funktionssichere und fein dosierte Bremswirkung wird dadurch erreicht, dass die übrigen Seile (IS, IS', ZS1 -ZSn; ZS1'-ZSn') in der Länge abgestuft ausgebildet sind.

## Beschreibung

### TECHNISCHES GEBIET

Die vorliegende Erfindung bezieht sich auf das Gebiet der Schutztechnik. Sie betrifft eine Seilbremse gemäss dem Oberbegriff des Anspruchs 1.

### STAND DER TECHNIK

Seilbremsen werden eingesetzt, um im Ausnahmefall auftretende hohe Zugkräfte aufzunehmen und zu neutralisieren. Derartige Seilbremsen finden beispielsweise Anwendung im Fahrstuhlbereich oder bei Auffangvorrichtungen (z.B. Schutznetzen) für Steinschlag und dergleichen.

Das Dokument WO 2014/07581 7 A1 betrifft ein Bremselement zur Absorption kinetischer Energie in einer Auffangvorrichtung, insbesondere für Steinschlag, Murgang, Hangmuren, Rutschungen oder Baumschlag, umfassend einen Grundkörper mit einer ersten und einer zweiten Befestigungsstelle, wobei an der ersten und zweiten Befestigungsstelle jeweils ein Zugelement derart angeordnet sein kann, dass durch die Zugelemente eine auf das Bremselement zwischen den Befestigungsstellen wirkende Zugkraft angelegt werden kann, wobei die erste und die zweite Befestigungsstelle einen Abstand entlang der Zugkraft voneinander haben, dadurch gekennzeichnet, dass das Bremselement derart ausgestaltet ist, dass sich der Abstand zwischen den Befestigungsstellen durch kontinuierliches Aufreißen und Verformen des Grundkörpers entlang einer vorbestimmten Aufreißstrecke vergrößert, wenn die Zugkraft einen vorbestimmten Betrag übersteigt, welche Aufreißstrecke eine Doppelspirale aus zwei gegenläufigen, ineinander übergehenden Spiralen oder eine gerade oder mäandrierende Linie oder, im Fall eines zylindermante1förmigen Grundkörpers, einen schraubenförmigen Verlauf in dem Grundkörper bildet.

Das Dokument EP 1 469 130 A1 offenbart ein Bremselement zur Absorption kinetischer Energie in Auffangvorrichtungen für bewegte Massen, insbesondere für Rückhalteseile in Steinschlag- und/oder Eisschlagverbauungen, dadurch gekennzeichnet, dass das Bremselement im Wesentlichen aus einer schraubenförmigen Spirale aus plastisch verformbarem Material besteht, so dass durch Zug an den Enden der Spirale und die dabei auftretende Verformung Energie von der Spirale absorbierbar ist.

Das Dokument EP 0 531 574 A1 beschreibt eine Seilbremse für ein Befestigungsseil zum Fixieren eines Fangnetzes, insbesondere Steinschlagnetzes, bei der eine auf das Befestigungsseil einwirkende schlagartige Belastungsenergie in Reibungsenergie umgewandelt wird, wobei an einem Träger mehrere Bremselemente mit kreisrundem Querschnitt befestigt sind, und wobei ein Teil des Befestigungsseiles um die Bremselemente mit jeweils einfachem Umschlingungswinkel geschlungen ist.

Das Dokument EP 1 870 522 A1 offenbart eine Vorrichtung zur Dämpfung für ein auf Zug beanspruchtes Seil, insbesondere für Steinschlag-, Murgang- und Schneeverbauungen, mit einem länglichen, wendelartig geformten Deformationselement, durch welches das Seil durchschlaufbar ist, wobei beide sich überlappenden Endbereiche des Deformationselementes durch ein Halteorgan geführt sind und das Deformationselement bei Überlastung des Seiles unter Verminderung des Wendeldurchmessers plastisch deformierbar ist. Das Halteorgan weist Anschrägungen bzw. Rundungen oder sonstige reibungshemmende Ausbildungen am Ein- und Ausgang einer für die sich überlappenden Endbereiche des Deformationselementes gebildeten Öffnung auf.

Das Dokument WO 2009/052950 A1 schliesslich beschreibt eine Bremsvorrichtung zur Absorption von kinetischer Energie, welche in einer Verbauung zum Schutz gegen herabfallende Massen, insbesondere gegen Stein und Lawinen, bei dynamischer Beanspruchung auftritt, mit mindestens einem Absorptionselement, welches zwischen zwei Halteenden zum Halten angeordnet ist und mittels welchem Energie durch Zug an den Halteenden absorbierbar ist, wobei das Absorptionselement, wenn es Energie absorbiert, im Wesentlichen gerade verläuft, um die Energie dadurch zu absorbieren, dass es durch den Zug gedehnt und dabei dünner wird.

In einer Ausgestaltung der WO 2009/052950 A1 (Fig. 4) sind dabei mehrere Schlaufen vorgesehen, die eine zunehmende Länge aufweisen, wodurch die Absorptionselemente gestaffelt beansprucht werden, indem zuerst die kürzesten Absorptionselemente zu Bruch gehen und anschliessend die nächst längeren Absorptionselemente weiter gestreckt und bis zum Bruch gedehnt werden. Dadurch kann der Bremskraftverlauf, d.h. die Bremskraft in Abhängigkeit des Bremswegs entsprechend spezifischer Anforderungen gesteuert werden. Ein stabiles Hauptseil, welches nach Streckung bzw. Bruch der Absorptionselemente die Seilverbindung aufrechterhält, ist nicht vorgesehen.

In einer anderen Ausgestaltung (Fig. 7) umfasst die Bremsvorrichtung mehrere Absorptionselemente in Form von parallel verlaufenden Drähten, deren Enden direkt mit einem Seil oder einer Seilstruppe mittels einer Presshülse verbunden sind. Das Seil weist zwischen den zwei Presshülsen eine Länge auf, die dem maximalen Bremsweg der Bremsvorrichtung entspricht, sodass am Ende des Bremsweges das Seil gestreckt ist und die anstehende Kraft übernehmen kann. Die Absorptionselemente sind hier jedoch nicht in der Länge abgestuft.

### DARSTELLUNG DER ERFINDUNG

Es ist daher eine Aufgabe der Erfindung, eine Seilbremse zu schaffen, welche die Nachteile bekannter Seilbremsen vermeidet und insbesondere einfach aufgebaut ist, funktionssicher ist und Zugkräfte verschiedener Stärke auf vorhersagbare Weise aufnehmen und unschädlich machen kann, ohne dass die der Seilbremse zugrundeliegende Seilverbindung aufgehoben wird.

Die Aufgabe wird durch die Merkmale des Anspruchs 1 gelöst.

Die erfindungsgemässe Seilbremse umfasst eine zwischen einem ersten Endpunkt und einem zweiten Endpunkt verlaufende Seilanordnung, welche zur Aufnahme von zwischen den Endpunkten anliegenden Zugkräften ausgebildet ist, wobei die Seilanordnung wenigstens einen zwischen den beiden Endpunkten verlaufenden Strang aufweist, in welchem eine Mehrzahl von Seilen abgestufter Länge in Strangrichtung parallel zueinander angeordnet und unter Ausbildung von offenen Seilschlaufen jeweils an ihren Enden miteinander fest verbunden sind, und wobei die Seile ein Aussenseil maximaler Länge umfassen, welches als Hauptseil gegenüber den übrigen Seilen einen grösseren Seildurchmesser aufweist, dadurch gekennzeichnet, dass die übrigen Seile in der Länge abgestuft ausgebildet sind.

Das Aussenseil maximaler Länge stellt im Bremsfall sicher, dass die Seilverbindung zwischen den beiden Endpunkten in jedem Fall erhalten bleibt. Die übrigen Seile kleineren Seildurchmessers treten aufgrund der abgestuften Längen nacheinander als Bremselemente in Aktion. Die auftretenden Zugkräfte werden dabei ganz oder teilweise an das Seil mit der nächstgrösseren Länge übergeben, wenn das benachbarte kürzere Seil aufgrund der anliegenden Zugkräfte ausreichend stark gedehnt oder sogar ganz gerissen ist.

Da die Abstufung sich auf einfache Weise durch einen Festlegung der Seillängen im Zusammenhang mit der jeweiligen Seilstärke und der damit verbundenen vorbekannten Bruchdehnung vornehmen lässt, kann die Bremswirkung präzise eingestellt werden, ohne von irgendwelchen schwierig beherrschbaren Reibungswerten oder dgl. abhängig zu sein. So haben sich beispielsweise für Fangnetze von Steinschlägen Längenabstufungen von 100mm bei Seildurchmessern von Stahlseilen von 1 2mm bewährt. Es ist aber auch denkbar, je nach Aufgabenstellung andere Seildurchmesser und andere Abstufungen zu wählen.

Gemäss einer Ausgestaltung der Erfindung sind die Seile in einem Abschnitt des Stranges angeordnet sind. Weitere Abschnitte dienen insbesondere der Befestigung der Seilbremse und der Einleitung der zu neutralisierenden Zugkräfte.

So kann der Strang insgesamt drei zwischen den Endpunkten in Strangrichtung aufeinanderfolgende Abschnitte aufweisen, wobei der Abschnitt mit den Seilen der mittlere der drei Abschnitte ist.

Grundsätzlich können in jedem der Abschnitte einzelne Seilstücke vorgesehen werden. Jedoch ist es denkbar und in Bezug auf vereinfachte Herstellung und höhere Sicherheit vorteilhaft, wenn das Aussenseil durch alle drei Abschnitte hindurchgeführt ist und im Bereich der Endpunkte jeweils in einer geschlossenen Seilschlaufe endet.

Dabei hat es sich bewährt, wenn zur Bildung der geschlossenen Seilschlaufen jeweils Presshülsen eingesetzt sind, und die geschlossenen Seilschlaufen jeweils mit einer Kausche ausgestattet sind.

Eine andere Ausgestaltung der Erfindung ist dadurch gekennzeichnet, dass die Seile an ihren Enden jeweils durch eine Presshülse miteinander fest verbunden sind. Auch hier sorgen die Presshülsen für einfache Montage und hohe Funktionssicherheit.

Eine weitere Ausgestaltung der Erfindung ist dadurch gekennzeichnet, dass die Seilbremse zwei in Strangrichtung parallel angeordnete, zwischen dem ersten und zweiten Endpunkt verlaufenden, gleichartige Stränge aufweist, wobei in jedem Strang eine Mehrzahl von Seilen abgestufter Länge in Strangrichtung parallel zueinander angeordnet und unter Ausbildung von offenen Seilschlaufen jeweils an ihren Enden miteinander fest verbunden sind, wobei die Seile ein Aussenseil maximaler Länge umfassen, welches als Hauptseil gegenüber den übrigen Seilen einen grösseren Seildurchmesser aufweist, und wobei die übrigen Seile in den beiden Strängen in der Länge derart unterschiedlich abgestuft ausgebildet sind, dass zur Verfeinerung der Längenabstufung die abgestuften Längen des einen Stranges jeweils zwischen zwei abgestuften Längen des anderen Stranges liegen.

Durch die Verteilung der Zugkräfte auf zwei separate Stränge wird die Funktionssicherheit der Seilbremse weiter erhöht. Darüber hinaus kann die Längenabstufung und damit die quasi-stetige Bremswirkung durch die verschränkten Längen der Seile weiter verfeinert werden, ohne dass sich zu viele Seilschlaufen in einer Presshülse befinden oder sich gegenseitig beim behindern. Es ist auch denkbar, über die zwei Stränge hinaus weitere Stränge vorzusehen und miteinander zu kombinieren.

Die beiden Stränge können am zweiten Endpunkt zusammenlaufen und dort miteinander verbunden sein, wobei die beiden Stränge am ersten Endpunkt getrennt voneinander enden. Hierdurch ergibt sich eine höhere Flexibilität beim Einsatz und der Montage der Seilbremse. Insbesondere ist es denkbar, die beiden Stränge am ersten Endpunkt V-förmig auseinanderzuziehen, wenn weiter beabstandete Montagepunkte vorhanden sind. Die anliegenden Zugkräfte können so an dieser Seite aufgeteilt werden.

Besonderes einfach sind Aufbau und Herstellung der Seilbremse, wenn die Aussenseile der beiden Stränge durch ein gemeinsames Hauptseil gebildet werden, welches in einem Strang vom ersten Endpunkt zum zweiten Endpunkt verläuft, dort unter Ausbildung einer geschlossenen Seilschlaufe die Richtung umkehrt und im andere Strang zum ersten Endpunkt zurückgeführt ist.

Je nach Einsatzart und zu erwartenden Belastungen können die Seile aus unterschiedlichen Materialien aufgebaut und hinsichtlich der Art der Verseilung unterschiedlich konstruiert sein. Gemäss einer Ausgestaltung der Erfindung sind die Seile aus verzinktem Stahldraht hergestellt.

Insbesondere weist das Aussenseil bzw. das Hauptseil einen Seildurchmesser von 22mm mit einer Mindestbruchkraft von 313kN und eine Konstruktion (Seilaufbau) von 6 x 36 WS + WC auf.

Die übrigen Seile weisen in diesem Zusaammenhang bis auf eine Ausnahme einen Seildurchmesser von 12mm mit einer Mindestbruchkraft von 100kN und einer Konstruktion (Seilaufbau) von 6 x 19 SEALE + WC auf.

Die Ausnahme ist ein Innenseil mit einem Seildurchmesser von 8mm mit einer Mindestbruchkraft von 45kN und einer Konstruktion (Seilaufbau) von 6 x 19 SEALE + WC.

Gemäss einer Ausgestaltung weisen die Aussenseile jeweils eine Länge von 2410mm auf, die sich auf den mittleren Abschnitt beschränkt.

Die übrigen Seile in den beiden Strängen sind in ihren Längen jeweils in Stufen von 100mm abgestuft.

### KURZE ERLÄUTERUNG DER FIGUREN

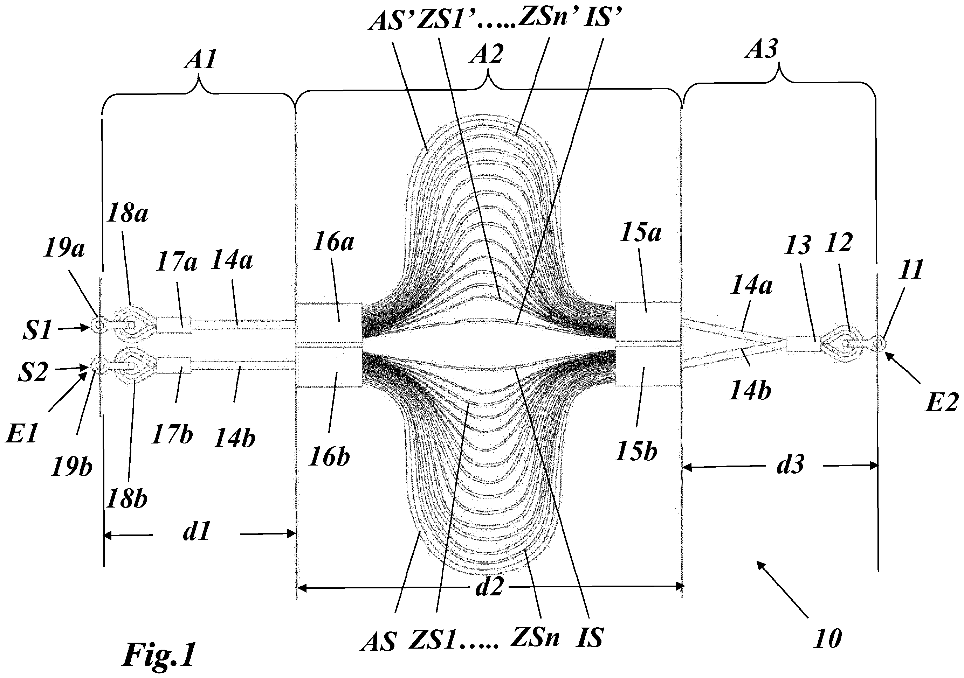

Die Erfindung soll nachfolgend anhand von Ausführungsbeispielen im Zusammenhang mit der Zeichnung näher erläutert werden. Die einzige Figur 1 zeigt in einer vereinfachten Darstellung ein Ausführungsbeispiel der erfindungsgemässen Seilbremse mit zwei Strängen in V-Anordnung sowie jeweils einem Aussen- oder Hauptseil und 15 in der Länge in 100mm-Schritten abgestuften Zwischenseilen.

### WEGE ZUR AUSFÜHRUNG DER ERFINDUNG

Die Fig. 1 zeigt in einer Seitenansicht ein Ausführungsbeispiel einer Seilbremse nach der Erfindung. Die Seilbremse 10 der Fig. 1 erstreckt sich in gerader Ausrichtung zwischen zwei Endpunkten E1 und E2 und lässt sich an diesen Endpunkten mittels entsprechender Schäkel 11 bzw. 1 9a und 1 9b lösbar befestigen. Die Schäkel 11 und 1 9a, 1 9b sind durch geschlossene Seilschlaufen 12 und 18a, 18b geführt, die an den Enden der Seilbremse 10 von einem (zwischen den Enden E1 und E2 hin- und hergeführten) Hauptseil 14a, 14b unter Verwendung von jeweils einer Kausche und einer Presshülse 13 bzw. 1 7a, 1 7b gebildet werden.

Die Seilbremse 10 umfasst zwei gleichartige, zwischen den Endpunkten E1 und E2 parallel verlaufende Stränge S1 und S2, die am ersten Ende E1 getrennte Enden mit getrennten Seilschlaufen 18a und 18b aufweisen und am zweiten Ende E2 untereinander in einer Seilschlaufe 12 fest verbunden sind. Die Seilbremse 10 ist in Längsrichtung in drei hintereinander angeordnete Abschnitte A1, A2 und A3 unterteilt, die jeweils eine bestimmte Länge d1, d3 bzw. einen variablen Längenbereich d2 haben.

Die Länge d1 des Abschnitts A1 beträgt im Ausführungsbeispiel 428mm, die Länge d3 des Abschnitts A3 beträgt im Ausführungsbeispiel 1000mm und die Länge d2 des mittleren Abschnitts A2 variiert zwischen 800mm (neue Bremse ohne Bremsaktion) und 2410mm (nach maximaler Bremswirkung, wenn bis auf ein Aussenseil As bzw. AS' alle anderen Seile gelängt bzw. gerissen sind).

Für die Bremswirkung der Seilbremse 10 ist der mittlere Abschnitt A2 entscheidend, in welchem in jedem Strang S1, S2 eine Mehrzahl von Seilen AS, ZS1, ...ZSn, IS (Strang S2) bzw. AS', ZS1',...,ZSn', IS' (Strang S1) unter Ausbildung offener Schlaufen parallel zueinander angeordnet und an den Enden mittels entsprechender Presshülsen 15, 1 6a und 1 5b, 1 6b untereinander fest verbunden sind. In Fig. 1 sind nur die aussen liegenden Aussenseile AS, AS' und die innen liegenden Innenseile IS, IS' einzeln mit Bezugszeichen versehen. Die übrigen Seile, die Zwischenseile ZS1 bis ZSn (Strang S2) und ZS1' bis ZSn' (Strang S1) sind der besseren Übersicht halber nicht alle mit einzelnen Bezugszeichen bezeichnet.

Die Aussenseile AS und AS' im Abschnitt A2 sind nur Teilabschnitte eines einzigen Hauptseiles 14a, 14b, welches in einem Strang S1 vom ersten Endpunkt E1 zum zweiten Endpunkt E2 verläuft (14a), dort unter Ausbildung der geschlossenen Seilschlaufe 1 2 die Richtung umkehrt und im andere Strang S2 zum ersten Endpunkt zurückgeführt ist (14b). Die übrigen Seile ZS1 bis ZSn (Zwischenseile), IS (Innenseil) sowie ZS1' bis ZSn' (Zwischenseile) und IS' (Innenseil) sind Seilstücke, die jeweils in den Presshülsen 15a, 1 6a und 15b, 1 6b enden und dort mit dem Aussen- bzw. Hauptseil As bzw. AS' fest verbunden sind.

Im Ausführungsbeispiel sind alle Seile AS, AS'; IS, IS', ZS1-ZSn und ZS1'-ZSn' aus verzinktem Stahldraht hergestellt. Das Aussenseil AS AS' bzw. das Hauptseil 14a, 14b hat einen Seildurchmesser von 22mm mit einer Mindestbruchkraft von 313kN und eine Konstruktion (Seilaufbau) von 6 x 36 WS + WC. Die Aussenseile AS, AS' haben im Abschnitt A2 jeweils eine Länge von 2410mm.

Die übrigen Seile IS, IS', ZS1-ZSn und ZS1'-ZSn' haben bis auf eine Ausnahme einen Seildurchmesser von 12mm mit einer Mindestbruchkraft von 100kN und einer Konstruktion (Seilaufbau) von 6 x 19 SEALE + WC. Die Ausnahme ist ein Innenseil IS' mit einem Seildurchmesser von 8mm mit einer Mindestbruchkraft von 45kN und einer Konstruktion (Seilaufbau) von 6 x 19 SEALE + WC. Die übrigen Seile IS, IS', ZS1-ZSn und ZS1'-ZSn' in den beiden Strängen S1, S2 sind in ihren Längen jeweils in Stufen von 100mm abgestuft. Insgesamt ergibt sich mit Aussenseil AS' und 15 weiteren Seilen für Strang S1 im Abschnitt A2 die folgende Tabelle:

| Seil | Seildurchmesser | Länge |
|---|---|---|
| AS' | 22mm | 2410mm |
| ZS14' | 12mm | 2310mm |
| ZS13' | 12mm | 2210mm |
| ZS12' | 12mm | 2110mm |
| ZS11' | 12mm | 2010mm |
| ZS10' | 12mm | 1910mm |
| ZS9' | 11mm | 1810mm |
| ZS8' | 12mm | 1710mm |
| ZS7' | 12mm | 1610mm |
| ZS6' | 12mm | 1510mm |
| ZS5' | 12mm | 1410mm |
| ZS4' | 12mm | 1310mm |
| ZS3' | 12mm | 1210mm |
| ZS2' | 12mm | 1110mm |
| ZS1' | 12mm | 1010mm |
| IS' | 8mm | 800mm |

Insgesamt ergibt sich mit Aussenseil AS und 15 weiteren Seilen für Strang S2 mit derselben Abstufung von 100mm im Abschnitt A2 die folgende Tabelle:

| Seil | Seildurchmesser | Länge |
|---|---|---|
| AS | 22mm | 2410mm |
| ZS14 | 12mm | 2200mm |
| ZS13 | 12mm | 2100mm |
| ZS12 | 12mm | 2000mm |
| ZS11 | 12mm | 1900mm |
| ZS10 | 12mm | 1800mm |
| ZS9 | 11mm | 1700mm |
| ZS8 | 12mm | 1600mm |
| ZS7 | 12mm | 1500mm |
| ZS6 | 12mm | 1400mm |
| ZS5 | 12mm | 1300mm |
| ZS4 | 12mm | 1200mm |
| ZS3 | 12mm | 1100mm |
| ZS2 | 12mm | 1000mm |
| ZS1 | 12mm | 900mm |
| IS | 12mm | 800mm |

Bei den obigen Konstruktionsangaben für die verwendeten Seile bedeutet WC = Wire core, womit eine Stahleinlage im Innern des Seiles gemeint ist. Die Bezeichnung WS = Warrington Seale ist ebenfalls eine spezielle Konstruktionsart und beschreibt die Anordnung der Seildrähte in einer Litze; dasselbe gilt für die Bezeichnung Seale, die beschreibt, wie die einzelnen Drähte in einer Litze angeordnet sind. Diese Konstruktionsangaben sind dem Fachmann bekannt.

### Bezugszeichenliste

10 Seilbremse
11 Schäkel
12 Seilschlaufe (mit Kausch)
13 Presshülse
14a,14b Hauptseil
15a,15b Presshülse
16a,16b Presshülse
17a,17b Presshülse
18a,18b Seilschlaufe (mit Kausch)
19a,19b Schäkel
A1,A2,A3 Abschnitt
AS,AS' Aussenseil
d1,d2,d3 Länge
E1,E2Endpunkt
IS,IS' Innenseil
ZS1,..,ZSn Zwischenseil
ZS1',..,ZSn' Zwischenseil
S1,S2Strang

## Patentansprüche

1. Seilbremse (10), umfassend eine zwischen einem ersten Endpunkt (E1) und einem zweiten Endpunkt (E2) verlaufende Seilanordnung (14a, 14b; AS, AS'; IS, IS', ZS1-ZSn; ZS1'-ZSn'), welche zur Aufnahme von zwischen den Endpunkten (E1, E2) anliegenden Zugkräften ausgebildet ist, wobei die Seilanordnung (14a, 1 4b; AS, AS'; IS, IS', ZS1-ZSn; ZS1'-ZSn') wenigstens einen zwischen den beiden Endpunkten (E1, E2) verlaufenden Strang (S1, S2) aufweist, in welchem eine Mehrzahl von Seilen (AS, AS'; IS, IS', ZS1-ZSn; ZS1'-ZSn') abgestufter Länge in Strangrichtung parallel zueinander angeordnet und unter Ausbildung von offenen Seilschlaufen jeweils an ihren Enden miteinander fest verbunden sind, wobei die Seile ein Aussenseil (AS, AS') maximaler Länge umfassen, welches als Hauptseil gegenüber den übrigen Seilen (IS, IS', ZS1-ZSn; ZS1'-ZSn') einen grösseren Seildurchmesser aufweist, **dadurch gekennzeichnet, dass** die übrigen Seile (IS, IS', ZS1-ZSn; ZS1'-ZSn') in der Länge abgestuft ausgebildet sind.

2. Seilbremse nach Anspruch 1, **dadurch gekennzeichnet, dass** die Seile (AS, AS'; IS, IS', ZS1-ZSn; ZS1'-ZSn') in einem Abschnitt (A2) des Stranges (S1, S2) angeordnet sind.

3. Seilbremse nach Anspruch 2, **dadurch gekennzeichnet, dass** der Strang (S1, S2) insgesamt drei zwischen den Endpunkten (E1, E2) in Strangrichtung aufeinanderfolgende Abschnitte (A1, A2, A3) aufweist, und dass der Abschnitt (A2) mit den Seilen (AS, AS'; IS, IS', ZS1-ZSn; ZS1'-ZSn') der mittlere der drei Abschnitte (A1, A2, A3) ist.

4. Seilbremse nach Anspruch 3, **dadurch gekennzeichnet, dass** das Aussenseil (AS, AS') durch alle drei Abschnitte (A1, A2, A3) hindurchgeführt ist und im Bereich der Endpunkte (E1, E2) jeweils in einer geschlossenen Seilschlaufe (12; 18a, 18b) endet.

5. Seilbremse nach Anspruch 4, **dadurch gekennzeichnet, dass** zur Bildung der geschlossenen Seilschlaufen (12; 18a, 18b) jeweils Presshülsen (13; 17a, 17b) eingesetzt sind, und dass die geschlossenen Seilschlaufen (12; 18a, 18b) jeweils mit einer Kausche ausgestattet sind.

6. Seilbremse nach einem der vorhergehenden Ansprüche, **dadurch gekennzeichnet, dass** die Seile (AS, AS'; IS, IS', ZS1-ZSn; ZS1'-ZSn') an ihren Enden jeweils durch eine Presshülse (15a, 15b; 16a, 16b) miteinander fest verbunden sind.

7. Seilbremse nach einem der vorhergehenden Ansprüche, **dadurch gekennzeichnet, dass** die Seilbremse (10) zwei in Strangrichtung parallel angeordnete, zwischen dem ersten und zweiten Endpunkt (E1 bzw. E2) verlaufenden, gleichartige Stränge (S1, S2) aufweist, wobei in jedem Strang (S1, S2) eine Mehrzahl von Seilen (AS, AS'; IS, IS', ZS1-ZSn; ZS1'-ZSn') abgestufter Länge in Strangrichtung parallel zueinander angeordnet und unter Ausbildung von offenen Seilschlaufen jeweils an ihren Enden miteinander fest verbunden sind, wobei die Seile ein Aussenseil (AS, AS') maximaler Länge umfassen, welches als Hauptseil gegenüber den übrigen Seilen (IS, IS', ZS1-ZSn; ZS1'-ZSn') einen grösseren Seildurchmesser aufweist, und wobei die übrigen Seile (IS, IS', ZS1-ZSn; ZS1'-ZSn') in den beiden Strängen (S1, S2) in der Länge derart unterschiedlich abgestuft ausgebildet sind, dass zur Verfeinerung der Längenabstufung die abgestuften Längen des einen Stranges jeweils zwischen zwei abgestuften Längen des anderen Stranges liegen.

8. Seilbremse nach Anspruch 7, **dadurch gekennzeichnet, dass** die beiden Stränge (S1, S2) am zweiten Endpunkt (E2) zusammenlaufen und dort miteinander verbunden sind, und dass die beiden Stränge (S1, S2) am ersten Endpunkt (E1) getrennt voneinander enden.

9. Seilbremse nach Anspruch 8, **dadurch gekennzeichnet, dass** die Aussenseile (AS, AS') der beiden Stränge (S1, S2) durch ein gemeinsames Hauptseil (14a, 14b) gebildet werden, welches in einem Strang (S1) vom ersten Endpunkt (E1) zum zweiten Endpunkt (E2) verläuft, dort unter Ausbildung einer geschlossenen Seilschlaufe (12) die Richtung umkehrt und im andere Strang (S2) zum ersten Endpunkt zurückgeführt ist.

10. Seilbremse nach einem der vorhergehenden Ansprüche, **dadurch gekennzeichnet, dass** die Seile (AS, AS'; IS, IS', ZS1-ZSn; ZS1'-ZSn') aus verzinktem Stahldraht hergestellt sind.

11. Seilbremse nach Anspruch 10, **dadurch gekennzeichnet, dass** das Aussenseil (AS, AS') bzw. das Hauptseil (14a, 14b) einen Seildurchmesservon 22mm mit einer Mindestbruchkraft von 313kN und eine Konstruktion von 6 x 36 WS + WC aufweist.

12. Seilbremse nach Anspruch 10, **dadurch gekennzeichnet, dass** die übrigen Seile (IS, IS', ZS1-ZSn; ZS1'-ZSn') bis auf eine Ausnahme einen Seildurchmesser von 1 2mm mit einer Mindestbruchkraft von 100kN und einer Konstruktion von 6 x 19 SEALE + WC aufweisen.

13. Seilbremse nach Anspruch 12, **dadurch gekennzeichnet, dass** die Ausnahme ein Innenseil (IS') mit einem Seildurchmesser von 8mm mit einer Mindestbruchkraft von 45kN und einer Konstruktion von 6 x 19 SEALE + WC ist.

14. Seilbremse nach Anspruch 7, **dadurch gekennzeichnet, dass** die Aussenseile (AS, AS') jeweils eine Länge von 2410mm aufweisen.

15. Seilbremse nach Anspruch 7, **dadurch gekennzeichnet, dass** die übrigen Seile (IS, IS', ZS1-ZSn; ZS1'-ZSn') in den beiden Strängen (S1 , S2) in ihren Längen jeweils in Stufen von 100mm abgestuft sind.
